# EUROPEAN PATENT APPLICATION

(11) **EP 2 241 732 A1**
(43) Date of publication of application: **20.10.2010**
(21) Application number: 09708045.1
(22) Date of filing: 06.02.2009
(51) Int. Cl.: F01N 3/08, B01D 53/50, B01D 53/81, B01D 53/94, F01N 3/02, F01N 3/20, F01N 3/32, F01N 3/36, F23J 15/00

(54) **EXHAUST GAS PURIFICATION DEVICE**

(30) Priority: 08.02.2008 JP 2008028845
(71) Applicant: Yanmar Co., Ltd., Osaka-shi, Osaka 530-0013 (JP)
(72) Inventor: ONO, Taisuke, Osaka-shi Osaka 530-0013 (JP)
(74) Representative: Draper, Martyn John
(86) International application number: PCT/JP2009/052046
(87) International publication number: WO 2009/099181

(57) **Abstract**

An exhaust gas purification device (1) comprising a main exhaust passage (2) and a branch exhaust passage (3) connected to an exhaust passage (100) on the engine side; shutoff valves (4A) and (4B) capable of shutting off exhaust gas at the exhaust inlets (2a) and (3a) of the main exhaust passage (2) and the branch exhaust passage (3); a nitrogen oxide adsorbing material (5); an adsorbed material detachment unit (6), having an air nozzle (61); and a combustion device (7) including an air nozzle (71), a fuel nozzle (72) and an ignition plug (73), wherein the exhaust gas from the exhaust passage (100) on the engine side is discharged directly from the exhaust outlet (3b) of the branch exhaust passage (3).

## Description

### TECHNICAL FIELD

The present invention relates to a device for purifying exhaust gas discharged from internal combustion engines, such as diesel engines, gas engines, gasoline engines or gas turbine engines, or burning appliances, such as combustion furnaces and boilers, more particularly, to an exhaust gas purification device, connected to the exhaust passage of an internal combustion engine or the like performing normal operation in an excess air state, for eliminating nitrogen oxides.

### BACKGROUND ART

Harmful components, such as nitrogen oxides, carbon monoxide and hydrocarbons, are contained in exhaust gas discharged from internal combustion engines, etc. Various kinds of devices have been developed conventionally to eliminate such substances from the exhaust gas thereby to purify the exhaust gas.

The applicant of the present invention developed an exhaust gas purification device and has already applied for a patent (Patent document 1). FIG. 5 shows an exhaust gas purification device shown in FIG. 1 of Patent document 1. As shown in FIG. 5, in the conventional exhaust gas purification device proposed by the applicant, a nitrogen oxide adsorbing material 204, an adsorbed material detachment unit 203 and a combustion device 205 are provided for each of a plurality of branch exhaust passages 202a and 202b connected to an internal combustion engine or the like. The exhaust gas discharged from the internal combustion engine or the like is supplied only to one of the branch exhaust passages, i.e., 202a (or 202b), and not supplied to the other branch exhaust passage 202b (or 202a). Furthermore, in the branch exhaust passage 202a to which the exhaust gas is supplied, nitrogen oxides are adsorbed onto the nitrogen oxide adsorbing material 204 and eliminated, and carbon monoxide and hydrocarbons are oxidized to carbon dioxide and water by the oxidation catalyst contained in the nitrogen oxide adsorbing material 204. On the other hand, in the branch exhaust passage 202b to which the supply of the exhaust gas is shut off, nitrogen oxides are detached from the nitrogen oxide adsorbing material 204 by the adsorbed material detachment unit 203, and the detached nitrogen oxides are reduced to nitrogen by the combustion device 205. In other words, normal operation in which nitrogen oxides are adsorbed onto the nitrogen oxide adsorbing material 204 is performed in the one branch exhaust passage 202a. At the same time, in the other branch exhaust passage 202b, regeneration operation in which nitrogen oxides are detached from the adsorbed material detachment unit 204 is performed. As a result, the adsorption capability of the nitrogen oxide adsorbing material 204 is maintained.

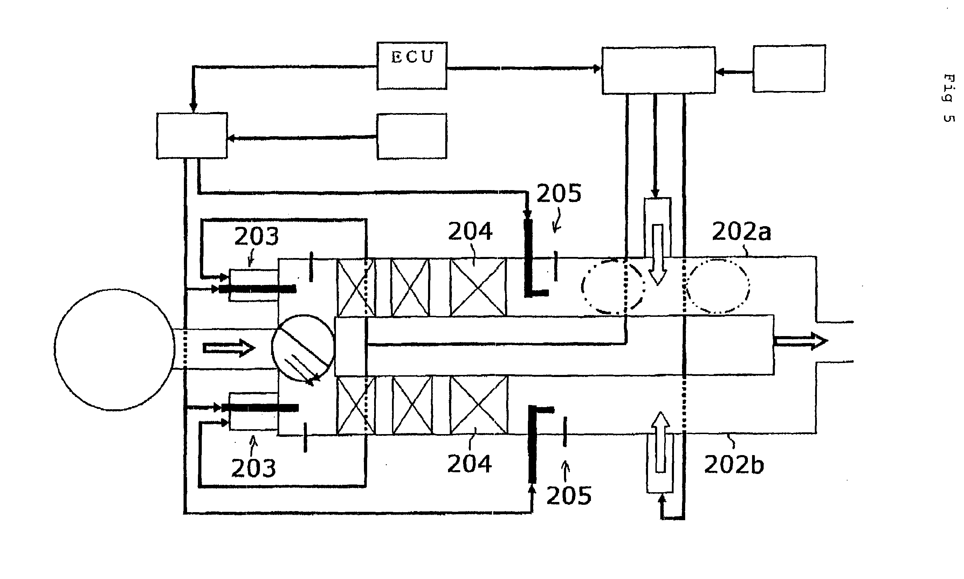

The exhaust gas purification device shown in FIG. 5 is a purification device that does not use a three-way catalyst, ammonia, urea, etc. The three-way catalyst serving as a catalyst capable of decomposing nitrogen oxides, carbon monoxide and hydrocarbons simultaneously does not act effectively in an excess air condition. In the case of a purification device that uses ammonia, etc., the device itself is very complicated and expensive. In addition, maintenance cost is necessary for ammonia, etc. serving reducing agents, and it is necessary to provide a system for supplying ammonia, etc., whereby many problems occur. In the exhaust gas purification device shown in FIG. 5, these problems have been solved. The exhaust gas purification device shown in FIG. 5 can eliminate harmful components (nitrogen oxides, carbon monoxide and hydrocarbons) from the exhaust gas discharged from an internal combustion engine or the like operating in an excess air condition to purify the exhaust gas and can maintain its purification capability without lowering the capability.

### CITATION LIST

Patent document 1: Japanese Patent Application Laid-open Publication No. 2006-272115

### SUMMARY OF INVENTION

### TECHNICAL PROBLEM

In the exhaust gas purification device shown in FIG. 5, the devices (adsorbing agents, detachment unit and combustion device) relating to the elimination of the harmful components are disposed in each of the plurality of branch exhaust passages to maintain the adsorption capability of the nitrogen oxide adsorbing material. This configuration causes a problem of increasing the production cost of the exhaust gas purification device.

The present invention is intended to provide an exhaust gas purification device being low in production cost.

### SOLUTION TO PROBLEM

A first aspect of the present invention provides an exhaust gas purification device connected to an exhaust passage on the engine side of an internal combustion engine or a burning appliance, comprising: a main exhaust passage and a branch exhaust passage connected to the exhaust passage on the engine side; an exhaust gas shutoff unit capable of shutting off exhaust gas at the exhaust inlets of the main exhaust passage and the branch exhaust passage; a nitrogen oxide adsorbing material, disposed inside the main exhaust passage, for temporarily adsorbing nitrogen oxides in an excess air atmosphere and for detaching the adsorbed nitrogen oxides in a rising temperature atmosphere or a reducing atmosphere; an adsorbed material detachment unit, disposed on the exhaust upstream side of the nitrogen oxide adsorbing material inside the main exhaust passage and having an air supply unit, for setting the atmosphere of the air supplied from the air supply unit to the rising temperature atmosphere or the reducing atmosphere; and a combustion device disposed on the exhaust downstream side of the nitrogen oxide adsorbing material inside the main exhaust passage and including an air supply unit, a fuel supply unit and an ignition unit, wherein the branch exhaust passage is configured so that the exhaust gas from the exhaust passage on the engine side is discharged directly without being processed.

It is preferable that the first aspect of the present invention adopts the following configurations (a) and (b).

In configuration (a), the first aspect of the present invention provides the exhaust gas purification device further comprising a filter member disposed on the exhaust downstream side of the combustion device inside the main exhaust passage and being capable of trapping particulate matter contained in the exhaust gas.

In configuration (b), the first aspect of the present invention provides the exhaust gas purification device further comprising a sulfur oxide adsorbing material, disposed on the exhaust upstream side of the nitrogen oxide adsorbing material and on the exhaust downstream side of the adsorbed material detachment unit inside the main exhaust passage, for temporarily adsorbing sulfur oxides in the excess air atmosphere and for detaching the adsorbed sulfur oxides in the rising temperature atmosphere or the reducing atmosphere.

A second aspect of the present invention provides An exhaust gas purification device connected to an exhaust passage on the engine side of an internal combustion engine or a burning appliance, comprising: a main exhaust passage and a branch exhaust passage connected to the exhaust passage on the engine side; an exhaust gas shutoff unit capable of shutting off exhaust gas at the exhaust outlet of the main exhaust passage and at the exhaust inlet of the branch exhaust passage, respectively; a nitrogen oxide adsorbing material, disposed inside the main exhaust passage, for temporarily adsorbing nitrogen oxides in an excess air atmosphere and for detaching the adsorbed nitrogen oxides in a rising temperature atmosphere or a reducing atmosphere; an adsorbed material detachment unit, disposed on the exhaust downstream side of the nitrogen oxide adsorbing material inside the main exhaust passage and having an air supply unit, for setting the atmosphere of the air supplied from the air supply unit to the rising temperature atmosphere or the reducing atmosphere in correspondence with the nitrogen oxide adsorbing material; a sulfur oxide adsorbing material disposed on the exhaust upstream side of the nitrogen oxide adsorbing material inside the main exhaust passage and being capable of adsorbing sulfur oxides; a combustion device disposed on the exhaust upstream side of the sulfur oxide adsorbing material inside the main exhaust passage and including an air supply unit, a fuel supply unit and an ignition unit; a filter member disposed on the exhaust upstream side of the combustion device inside the main exhaust passage and being capable of trapping particulate matter contained in the exhaust gas; and a controller for performing normal operation and regeneration operation, wherein the branch exhaust passage is configured so that the exhaust gas from the exhaust passage on the engine side is discharged directly without being processed, the controller opens the exhaust outlet of the main exhaust passage and closes the exhaust inlet of the branch exhaust passage by using the exhaust gas shutoff unit during the normal operation to allow the exhaust gas to pass through the main exhaust passage, and the controller closes the exhaust outlet of the main exhaust passage and opens the exhaust inlet of the branch exhaust passage by using the exhaust gas shutoff unit during the regeneration operation, and operates the adsorbed material detachment unit and the combustion device to allow the air flow generated by virtue of the exhaust gas shutoff unit and the air supply unit of the combustion device to pass through the main exhaust passage in a direction opposite to the flow direction of the exhaust gas.

### ADVANTAGEOUS EFFECTS OF INVENTION

According to the first aspect of the present invention, since the branch exhaust passage for allowing the exhaust gas to pass therethrough directly is provided, the exhaust gas purification device can shut off the flow of the exhaust gas into the main exhaust passage, and can detach the nitrogen oxides from the nitrogen oxide adsorbing material inside the main exhaust passage. For this reason, the exhaust gas purification device can maintain the capability of adsorbing the nitrogen oxides while the nitrogen oxide adsorbing material, the adsorbed material detachment unit and the combustion device relating to the adsorption, detachment and reduction of the nitrogen oxides are disposed in only one exhaust passage (the main exhaust passage). As a result, an exhaust gas purification device being low in cost is provided.

In addition, according to the configuration (a), since the exhaust gas purification device comprises the filter member, the exhaust gas purification device can eliminate the particulate matter from the exhaust gas. Furthermore, the exhaust gas purification device can maintain the trapping capability of the filter member by the operation of the adsorbed material detachment unit.

Furthermore, according to the configuration (b), since the exhaust gas purification device comprises the sulfur oxide adsorbing material on the exhaust upstream side of the nitrogen oxide adsorbing material, the exhaust gas purification device can prevent the sulfur oxides from flowing into the nitrogen oxide adsorbing material. Moreover, the exhaust gas purification device can maintain the adsorption capability of the sulfur oxide adsorbing material for adsorbing the sulfur oxides by the operation of the adsorbed material detachment unit. Besides, when the sulfur oxides are detached, the nitrogen oxide adsorbing material is also placed in the rising temperature atmosphere and the reducing atmosphere, whereby the sulfur oxides do not attach to the nitrogen oxide adsorbing material. In other words, performance degradation of the nitrogen oxide adsorbing material due to poisoning by sulfur oxides is prevented.

According to the second aspect of the present invention, since the branch exhaust passage for allowing the exhaust gas to pass therethrough directly is provided, the exhaust gas purification device can shut off the flow of the exhaust gas into the main exhaust passage, and can detach the nitrogen oxides from the nitrogen oxide adsorbing material inside the main exhaust passage. For this reason, the exhaust gas purification device can maintain the capability of adsorbing the nitrogen oxides while the nitrogen oxide adsorbing material, the adsorbed material detachment unit and the combustion device relating to the adsorption, detachment and reduction of the nitrogen oxides are disposed in only one exhaust passage (the main exhaust passage). As a result, an exhaust gas purification device being low in cost is provided.

In addition, since the exhaust gas purification device comprises the filter member, the exhaust gas purification device can eliminate the particulate matter from the exhaust gas. Furthermore, the exhaust gas purification device can maintain the trapping capability of the filter member by the operation of the adsorbed material detachment unit.

Furthermore, since the exhaust gas purification device comprises the sulfur oxide adsorbing material on the exhaust upstream side of the nitrogen oxide adsorbing material, the exhaust gas purification device can prevent the sulfur oxides from flowing into the nitrogen oxide adsorbing material. Moreover, the exhaust gas purification device can maintain the adsorption capability of the sulfur oxide adsorbing material for adsorbing the sulfur oxides by the operation of the adsorbed material detachment unit. In particular, when the adsorbed material detachment unit is operated, the air flow to the exhaust upstream side is formed, whereby the sulfur oxides do not flow into the nitrogen oxide adsorbing material. In other words, performance degradation of the nitrogen oxide adsorbing material due to poisoning by the sulfur oxides is prevented.

### BRIEF DESCRIPTION OF DRAWINGS

FIG. 1 is a schematic view showing an exhaust gas purification device (a first embodiment);
FIG. 2 is a schematic view showing an exhaust gas purification device (a second embodiment);
FIG. 3 is a schematic view showing an exhaust gas purification device (a third embodiment);
FIG. 4 is a schematic view showing an exhaust gas purification device (a fourth embodiment); and
FIG. 5 is a schematic view showing the conventional exhaust gas purification device.

### REFERENCE SIGNS LIST

- 1: exhaust gas purification device
- 2: main exhaust passage
- 2a: exhaust inlet
- 2b: exhaust outlet
- 3: branch exhaust passage
- 3a: exhaust inlet
- 3b: exhaust outlet
- 4A, 4B: shutoff valve
- 5: nitrogen oxide adsorbing material
- 6: adsorbed material detachment unit
- 7: combustion device
- 8: filter member
- 9: sulfur oxide adsorbing material
- 10: controller
- 61, 71: air nozzle (a part of air supply unit)
- 62, 72: fuel nozzle (a part of fuel supply unit)
- 63, 73: ignition plug (ignition unit)
- 100: exhaust passage on the engine side
- 100b: exhaust outlet

### DESCRIPTION OF EMBODIMENTS

### (FIRST EMBODIMENT)

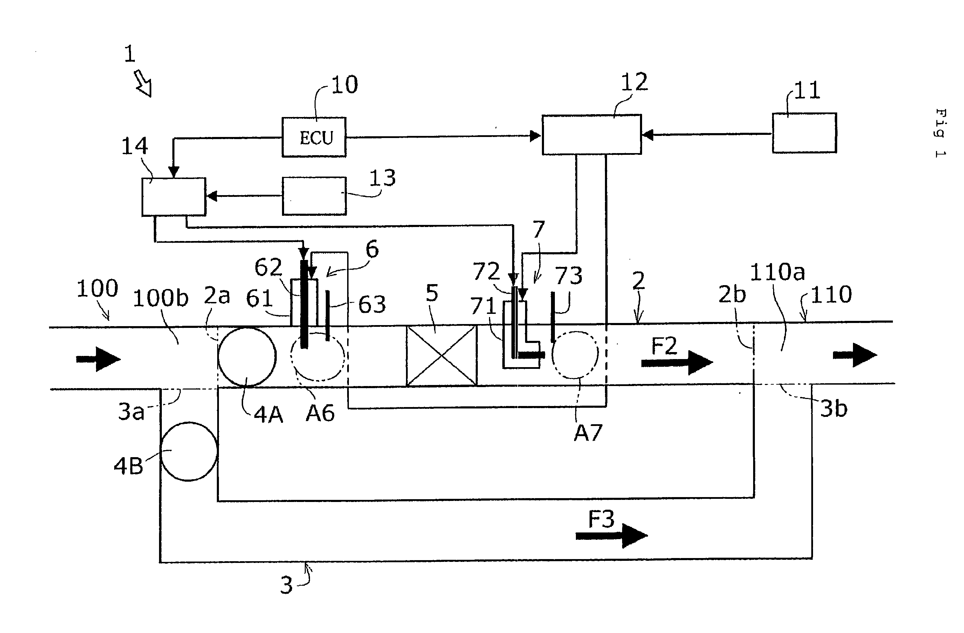

Referring to FIG. 1, an exhaust gas purification device 1 according to a first embodiment will be described. The exhaust gas purification device 1 is a device connected to an exhaust passage 100 on the engine side of an internal combustion engine or a burning appliance.

The internal combustion engine or the burning appliance burns a mixture gas of air and fuel and produces exhaust gas. The exhaust gas contains nitrogen oxides (NOx), carbon monoxide (CO) and hydrocarbons (HC) as unburned matters etc. The exhaust passage 100 on the engine side is an exhaust passage provided for the internal combustion engine or the burning appliance. The exhaust gas generated in the internal combustion engine or the burning appliance is discharged from the exhaust passage 100 on the engine side.

FIG. 1 shows the exhaust passage 100 on the engine side, a main exhaust passage 2, a branch exhaust passage 3 and a junction exhaust passage 110, these serving as exhaust gas passages. The main exhaust passage 2 and the branch exhaust passage 3 are exhaust passages provided for the exhaust gas purification device 1. The exhaust outlet 100b of the exhaust passage 100 on the engine side is connected to the exhaust inlet 2a of the main exhaust passage 2 and the exhaust inlet 3a of the branch exhaust passage 3. The exhaust outlet 2b of the main exhaust passage 2 and the exhaust outlet 3b of the branch exhaust passage 3 are connected to the exhaust inlet 110a of the junction exhaust passage 110. These exhaust passages 100, 2, 3 and 110 are passages shut off from the outside air and formed of pipes, for example. The junction exhaust passage 110 may be an exhaust passage provided for the exhaust gas purification device 1 or may be the exhaust passage of the internal combustion engine or the burning appliance.

The exhaust gas from the exhaust passage 100 on the engine side flows from the exhaust inlet 2a to the exhaust outlet 2b inside the main exhaust passage 2 and flows from the exhaust inlet 3a to the exhaust outlet 3b inside the branch exhaust passage 3. Hence, the direction from the exhaust inlet 2a to the exhaust outlet 2b in the main exhaust passage 2 is defined as exhaust direction F2 in the following description. Similarly, the direction from the exhaust inlet 3a to the exhaust outlet 3b in the branch exhaust passage 3 is defined as exhaust direction F3.

The exhaust gas purification device 1 comprises a controller (electronic control unit) 10. The controller 10 controls various devices (described later) provided for the exhaust gas purification device 1.

The exhaust gas purification device 1 comprises an exhaust gas shutoff unit capable of shutting off the exhaust gas at the exhaust inlets 2a and 3a of the main exhaust passage 2 and the branch exhaust passage 3.

More specifically, gas shutoff valves 4A and 4B are provided in the exhaust inlets 2a and 3a, respectively, as the exhaust gas shutoff unit. The shutoff valve 4A shuts off or allows the flow of the exhaust gas from the exhaust passage 100 on the engine side to the main exhaust passage 2. Similarly, the shutoff valve 4B shuts off or allows the flow of the exhaust gas from the exhaust passage 100 on the engine side to the branch exhaust passage 3. The switching between shutting off and allowing the flow at the shutoff valves 4A and 4B is controlled by the controller 10. The exhaust gas shutoff unit may be formed of a single changeover valve that performs switching between the main exhaust passage 2 and the branch exhaust passage 3 alternatively for an exhaust gas flow passage communicating with the exhaust passage 100 on the engine side. This changeover valve is disposed at each of the exhaust inlet 2a of the main exhaust passage 2 and inlet 3a of the branch exhaust passage 3.

The exhaust gas purification device 1 comprises a nitrogen oxide adsorbing material 5, an adsorbed material detachment unit 6 and a combustion device 7 inside the main exhaust passage 2. The adsorbed material detachment unit 6, the nitrogen oxide adsorbing material 5 and the combustion device 7 are arranged in this order from the upstream side to the downstream side in the exhaust direction F2.

The nitrogen oxide adsorbing material 5 is a material for temporarily adsorbing the nitrogen oxides in an excess air atmosphere and for detaching the adsorbed nitrogen oxides in a rising temperature atmosphere or a reducing atmosphere.

An excess air state is herein defined as a state in which the excess air ratio (the value obtained by dividing the air-fuel ratio of the supplied mixture gas by an ideal air-fuel ratio) in the mixture gas of air (oxygen) and fuel is larger than one. In addition, a state in which the excess air ratio is smaller than one is an excess fuel state. A reducing atmosphere is defined as an atmosphere of a gas being in a state in which the amount of a reducing agent is excessive and the amount of oxygen is insufficient when combustion (oxidation-reduction reaction) occurs.

Furthermore, the nitrogen oxides are detached from the nitrogen oxide adsorbing material 5 in the following three cases. In a first case of detachment, the nitrogen oxide adsorbing material 5 is placed in a rising temperature atmosphere. In a second case of detachment, the nitrogen oxide adsorbing material 5 is placed in a reducing atmosphere. In a third case of detachment, the nitrogen oxide adsorbing material 5 is placed in the rising temperature atmosphere and the reducing atmosphere.

The nitrogen oxide adsorbing material 5 also contains catalyst components having an oxidation action.

The adsorbed material detachment unit 6 is a detachment unit, having an air supply unit, for setting the atmosphere of the air supplied from the air supply unit to the rising temperature atmosphere or the reducing atmosphere.

In this embodiment, the adsorbed material detachment unit 6 is a combustion device. The combustion device includes an air supply unit, a fuel supply unit and an ignition unit. Furthermore, the adsorbed material detachment unit 6 performs a combustion reaction in an excess fuel condition and generates unburned matters (carbon monoxide and hydrocarbons) serves as reducing agents, thereby attaines temperature rising by the heat of the combustion reaction.

The air supply unit of the adsorbed material detachment unit 6 comprises an air supply unit 11, an air amount adjustment unit 12 and an air nozzle 61. The air supply unit 11 takes in outside air and supplies the air to the air amount adjustment unit 12. The air amount adjustment unit 12 adjusts the amount of the supplied air (outside air) and supplies the air to the air nozzle 61. The air nozzle 61 is a nozzle being open in a zone A6 inside the main exhaust passage 2. The air supplied to the air nozzle 61 is injected into the main exhaust passage 2. The controller 10 controls the air amount adjustment unit 12, thereby adjusting the amount of the air to be supplied to the air nozzle 61.

The fuel supply unit of the adsorbed material detachment unit 6 comprises the controller 10, a fuel tank 13, a fuel amount adjustment unit 14 and a fuel nozzle 62. Fuel is stored in the fuel tank 13. The fuel amount adjustment unit 14 adjusts the amount of the fuel to be supplied from the fuel tank 13 and supplies the fuel to the fuel nozzle 62. The fuel nozzle 62 is a nozzle being open in the zone A6 inside the main exhaust passage 2. The zone A6 is positioned on the exhaust upstream side of the nitrogen oxide adsorbing material 5. The fuel supplied to the fuel nozzle 62 is injected into the main exhaust passage 2. Furthermore, the controller 10 controls the fuel amount adjustment unit 14, thereby adjusting the amount of the fuel to be supplied to the fuel nozzle 62.

The ignition unit of the adsorbed material detachment unit 6 is an ignition plug 63. The ignition plug 63 is a device for performing ignition inside the main exhaust passage 2. The air injected from the air nozzle 61 is mixed with the fuel injected from the fuel nozzle 62 to form a mixture gas in the zone A6 inside the main exhaust passage 2. The ignition plug 63 ignites this mixture gas to cause combustion.

The adsorbed material detachment unit 6 is a combustion device and thus generates a rising temperature atmosphere and a reducing atmosphere on the exhaust downstream side of the adsorbed material detachment unit 6. The rising temperature atmosphere is generated by the combustion heat of the mixture gas. The reducing atmosphere is generated by the production of unburned matters (carbon monoxide and hydrocarbons) by virtue of the combustion of the mixture gas. Hence, the adsorbed material detachment unit 6 has the air supply unit and serves as a unit for setting the atmosphere of the air supplied from the air supply unit to the rising temperature atmosphere or the reducing atmosphere.

Exactly speaking, the position of the adsorbed material detachment unit 6 in the main exhaust passage 2 indicates the positions of the air nozzle 61, the fuel nozzle 62 and the ignition plug 63. In the adsorbed material detachment unit 6, the air nozzle 61, the fuel nozzle 62 and the ignition plug 63 are components directly relating to the main exhaust passage 2.

However, the adsorbed material detachment unit 6 is not limited to the combustion device described above. The adsorbed material detachment unit 6 should only comprise the air supply unit and be able to provide either one of the rising temperature atmosphere or the reducing atmosphere. The air supply unit is required to blow air inside the main exhaust passage 2 when the exhaust inlet 2a is closed.

The combustion device 7 comprises an air supply unit, a fuel supply unit and an ignition plug 73. The combustion device 7 is operated in an excess air condition and oxidizes unreacted reducing agents (unburned matters) having passed through the nitrogen oxide adsorbing material 5, thereby eliminating the reducing agents. Since an excess fuel combustion zone is locally present inside a combustion flame generated by the combustion device 7, the nitrogen oxides are reduced in this excess fuel combustion zone and eliminated. In particular, in the case that the combustion zone generated by the combustion device 7 is the so-called two-staged combustion type in which the combustion area generated by the combustion device 7 is distinctly separated into an excess fuel combustion zone and an excess air combustion zone, the action of eliminating the nitrogen oxides and unburned matters is attained effectively. Furthermore, in the case that the oxidation catalyst components contained in the nitrogen oxide adsorbing material 5 are noble metals, such as Pt, Rh and Pd, it is assumed that the nitrogen oxide adsorbing material 5 also has reduction catalyst components for reducing the nitrogen oxides in the reducing atmosphere. In this case, when the nitrogen oxides are detached from the nitrogen oxide adsorbing material 5, the most of the nitrogen oxides are reduced and eliminated. Hence, the action of eliminating the nitrogen oxides is attained more effectively.

The air supply unit of the combustion device 7 is similar to the air supply unit of the adsorbed material detachment unit 6. The air supply unit of the combustion device 7 comprises the air supply unit 11, the air amount adjustment unit 12 and an air nozzle 71. In other words, the air nozzle 61 in the air supply unit of the adsorbed material detachment unit 6 is replaced with the air nozzle 71 in the air supply unit of the combustion device 7. The air nozzle 71 is open in a zone A7 inside the main exhaust passage 2. The zone A7 is positioned on the exhaust downstream side of the nitrogen oxide adsorbing material 5.

The fuel supply unit of the combustion device 7 is similar to the fuel supply unit of the adsorbed material detachment unit 6. The fuel supply unit of the combustion device 7 comprises the fuel tank 13, the fuel amount adjustment unit 14 and a fuel nozzle 72. In other words, the fuel nozzle 62 in the air supply unit of the adsorbed material detachment unit 6 is replaced with the fuel nozzle 72 in the fuel supply unit of the combustion device 7. The fuel nozzle 72 is open in the zone A7 inside the main exhaust passage 2.

The ignition unit of the combustion device 7 is also similar to the ignition unit of the adsorbed material detachment unit 6. The ignition unit of the combustion device 7 is an ignition plug 73 that is used to perform ignition in the zone A7 inside the main exhaust passage 2.

On the other hand, exhaust gas processing devices are not provided inside the branch exhaust passage 3 of the exhaust gas purification device 1. Hence, the exhaust gas supplied from the exhaust passage 100 on the engine side to the branch exhaust passage 3 is discharged directly from the exhaust outlet 3b of the branch exhaust passage 3.

### (OPERATION OF FIRST EMBODIMENT)

Next, the operation of the exhaust gas purification device 1 will be described below. The controller 10 operates the exhaust gas purification device 1. Normal operation and regeneration operation are performed when the controller 10 operates the exhaust gas purification device 1.

During the normal operation, the exhaust gas discharged from the exhaust passage 100 on the engine side of the internal combustion engine or the like is passed through the main exhaust passage 2, and the nitrogen oxides contained in the exhaust gas are adsorbed onto the nitrogen oxide adsorbing material 5. During the normal operation, the controller 10 opens the shutoff valve 4A and closes the shutoff valve 4B. At this time, the controller 10 operates neither the adsorbed material detachment unit 6 nor the combustion device 7.

During the regeneration operation, after the nitrogen oxides adsorbed onto the nitrogen oxide adsorbing material 5 by virtue of the normal operation are detached from the nitrogen oxide adsorbing material 5, the nitrogen oxides are reduced to nitrogen and rendered harmless. During the regeneration operation, the controller 10 closes the shutoff valve 4A and opens the shutoff valve 4B. Furthermore, the controller 10 operates the adsorbed material detachment unit 6 and the combustion device 7.

When the operation of the internal combustion engine or the like connected to the exhaust gas purification device 1 is started, the controller 10 starts the operation of the exhaust gas purification device 1. At this time, the controller 10 starts the normal operation. Since the shutoff valve 4A is opened, the exhaust gas is supplied to the main exhaust passage 2 and flows into the main exhaust passage 2 in the exhaust direction F2. On the other hand, since the shutoff valve 4B is closed, the exhaust gas does not flow into the branch exhaust passage 3.

During the normal operation, the nitrogen oxides contained in the exhaust gas are adsorbed onto the nitrogen oxide adsorbing material 5. The nitrogen oxides are thus eliminated from the exhaust gas. Furthermore, since the nitrogen oxide adsorbing material 5 has oxidation catalyst components, the carbon monoxide and hydrocarbons contained in the exhaust gas are oxidized. Hence, the carbon monoxide and hydrocarbons are oxidized into carbon dioxide and water and rendered harmless. The carbon dioxide and hydrocarbons are thus eliminated from the exhaust gas.

As the nitrogen oxide adsorbing material 5 adsorbs the nitrogen oxides, the adsorption capability of the nitrogen oxide adsorbing material 5 lowers. Detaching the nitrogen oxides from the nitrogen oxide adsorbing material 5 is necessary to maintain the adsorption capability of the nitrogen oxide adsorbing material 5.

The controller 10 performs the normal operation until the adsorption amount of the nitrogen oxides onto the nitrogen oxide adsorbing material 5 reaches a predetermined amount or for a predetermined constant time. The time during which the normal operation is performed is defined as normal operation time.

When the normal operation time has passed after the start of the normal operation, the controller 10 interrupts the normal operation and starts the regeneration operation. Since the shutoff valve 4A is closed, the exhaust gas does not flow into the main exhaust passage 2. On the other hand, since the shutoff valve 4B is opened, the exhaust gas is supplied to the branch exhaust passage 3 and flows into the branch exhaust passage 3 in the exhaust direction F3.

During the regeneration operation, the controller 10 operates the adsorbed material detachment unit 6 in the excess fuel condition. After a mixture gas of fuel and air is produced in the zone A6 by the operation of the adsorbed material detachment unit 6, this mixture gas is burned. The burned gas generated produced by burning the mixture gas contains carbon monoxide and hydrocarbons as unburned matters. The carbon monoxide and hydrocarbons serve as reducing agents for the nitrogen oxides. In addition, the temperature of the burned gas has been raised by the heat of the combustion. Since air is injected from the air nozzle 61, the burned gas is fed to the exhaust downstream side. As a result, a reducing atmosphere and a rising temperature atmosphere are generated around the nitrogen oxide adsorbing material 5 by virtue of the burned gas.

Since the nitrogen oxide adsorbing material 5 is placed in the reducing atmosphere and the rising temperature atmosphere, the nitrogen oxides adsorbed onto the nitrogen oxide adsorbing material 5 are detached from the nitrogen oxide adsorbing material 5. In the case that the material of the nitrogen oxide adsorbing material 5 is made of noble metals, such as Pt, the detached nitrogen oxides are reduced to nitrogen immediately.

The controller 10 operates the combustion device 7 in the excess fuel condition when or after the adsorbed material detachment unit 6 is operated. By the operation of the combustion device 7, a mixture gas of fuel and air is produced in the zone A7, and this mixture gas is burnt.

The burned gas containing the nitrogen oxides, etc. passes through the zone A7. The burned gas containing the nitrogen oxides, etc. is also burned in the zone A7. In the excess fuel combustion zone of the zone A7, the nitrogen oxides, etc. contained in the burned gas are reduced to nitrogen while the fuel and the unburned matters (carbon monoxide and hydrocarbons) are used as reducing agents. Furthermore, in the excess air combustion zone of the zone A7, the unburned matters are oxidized by the combustion reaction to carbon dioxide and water.

A gas having been subjected to combustion twice is discharged from the exhaust outlet 2b of the main exhaust passage 2. From this gas, the nitrogen oxides have been eliminated and the carbon monoxide and hydrocarbons, i.e., the unburned matters, have also been eliminated. In other words, a gas from which harmful substances have been eliminated is discharged from the main exhaust passage 2.

The controller 10 performs the regeneration operation until the adsorption amount of the nitrogen oxides onto the nitrogen oxide adsorbing material 5 becomes zero (or a minute constant value) or for a predetermined constant time. The time during which the regeneration operation is performed is defined as regeneration operation time. During the regeneration operation, the controller 10 continues the operation of the adsorbed material detachment unit 6 and the combustion device 7. By virtue of the regeneration operation, the nitrogen oxides are eliminated from the nitrogen oxide adsorbing material 5, and the adsorption capability of the nitrogen oxide adsorbing material 5 is regenerated. When the regeneration operation time has passed after the start of the normal operation, the controller 10 interrupts the regeneration operation and restarts the normal operation. After this, the controller 10 repeats the normal operation and the regeneration operation alternately.

During the regeneration operation, the exhaust gas is discharged through the branch exhaust passage 3. In other words, during the regeneration operation, the exhaust gas is discharged from the exhaust gas purification device 1 while the nitrogen oxides contained in the exhaust gas are not eliminated.

Hence, the ratio of the regeneration operation time to the normal operation time is set so as to be small. The normal operation time is set to a time during which the nitrogen oxide adsorbing material 5 can deliver the adsorption capability of a constant level or more. For this reason, even if the operation conditions of the exhaust gas purification device 1 are changed, the ratio of the normal operation time (normal operation time/(normal operation time + regeneration operation time) cannot be shortened. On the other hand, the regeneration operation time is set as a time required for the regeneration of the nitrogen oxide adsorbing material 5. The regeneration speed of the nitrogen oxide adsorbing material 5 can be shortened by changing the operation conditions (the settings of the injection amounts of fuel and air per unit time, etc.) of the adsorbed material detachment unit 6 and the combustion device 7. Hence, the decreasing rate of the nitrogen oxides contained in the exhaust gas is maintained high by making the ratio of the regeneration operation time to the normal operation time small.

### (EFFECTS OF FIRST EMBODIMENT)

The exhaust gas purification device 1 according to the first embodiment has the following effects.

Since the branch exhaust passage 3 for allowing the exhaust gas to pass therethrough directly is provided, the exhaust gas purification device 1 can shut off the flow of the exhaust gas into the main exhaust passage 2, and can detach the nitrogen oxides from the nitrogen oxide adsorbing material 5 inside the main exhaust passage 2. For this reason, the exhaust gas purification device 1 can maintain the capability of adsorbing the nitrogen oxides while the nitrogen oxide adsorbing material 5, the adsorbed material detachment unit 6 and the combustion device 7 relating to the adsorption, detachment and reduction of the nitrogen oxides are disposed in only one exhaust passage (the main exhaust passage 2). As a result, an exhaust gas purification device being low in cost is provided.

### (SECOND EMBODIMENT)

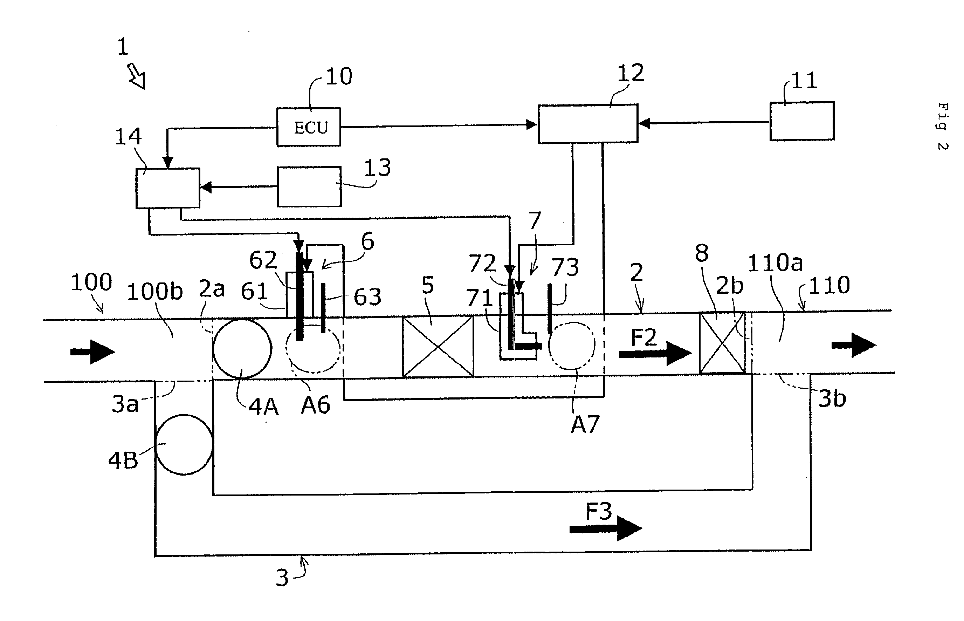

Referring to FIG. 2, an exhaust gas purification device 1 according to a second embodiment will be described. The exhaust gas purification device 1 according to the second embodiment has a configuration in which a filter member 8 is further provided for the exhaust gas purification device 1 according to the first embodiment.

The filter member 8 is disposed on the exhaust downstream side of the combustion device 7 inside the main exhaust passage 2.

The filter member 8 is a member capable of trapping particulate matter contained in the exhaust gas. The particulate matter is defined as particles of carbon, hydrocarbons, nitrates, etc. generated due to incomplete combustion of fuel.

### (OPERATION OF SECOND EMBODIMENT)

Next, the operation of the exhaust gas purification device 1, relating to the filter member 8, will be described below.

In the second embodiment, in addition to the normal operation and the regeneration operation, filter regeneration operation and filter normal operation are performed when the controller 10 operates the exhaust gas purification device 1.

During the filter regeneration operation, the particulate matter trapped in the filter member 8 is oxidized and eliminated. During the filter regeneration operation, the controller 10 operates the combustion device 7. When the combustion device 7 is operated, a combustion reaction occurs in the zone A7 and on the exhaust downstream side of the zone A7. By this combustion reaction, the particulate matter (carbon) trapped in the filter member 8 is oxidized and eliminated. Even during the filter regeneration operation, the combustion device 7 produces and burns a mixture gas containing excess air to oxidize the particulate matter.

The filter normal operation is performed when the filter regeneration operation is not performed. In other words, during the filter normal operation, the controller 10 does not operate the combustion device 7.

The controller 10 performs the filter normal operation until the amount of the particulate matter trapped in the filter member 8 reaches a predetermined amount or for a predetermined constant time. The time during which the filter normal operation is performed is defined as filter normal operation time.

The amount of the particulate matter trapped in the filter member 8 can be detected by providing a detector for detecting the trapped amount. For example, a pressure sensor for detecting the pressure inside the main exhaust passage 2 is provided as a detector for detecting the trapped amount on the exhaust upstream side and on the exhaust downstream side of the filter member 8. Depending on the trapped amount, the degree of clogging of the filter member 8 changes, whereby the pressure difference between the exhaust upstream side and the exhaust downstream side of the filter member 8 changes. For this reason, the trapped amount can be specified depending on the pressure difference.

The filter regeneration operation and the filter normal operation are performed at times different from those of the normal operation and the regeneration operation. Since both the filter regeneration operation and the regeneration operation are performed in an excess fuel condition, the filter regeneration operation and the regeneration operation may be performed at the same time.

### (EFFECTS OF SECOND EMBODIMENT)

The exhaust gas purification device 1 according to the second embodiment further has the following effects.

Since the exhaust gas purification device 1 comprises the filter member 8, the exhaust gas purification device 1 can eliminate the particulate matter from the exhaust gas. Furthermore, the exhaust gas purification device 1 can maintain the trapping capability of the filter member 8 by the operation of the adsorbed material detachment unit 6.

### (THIRD EMBODIMENT)

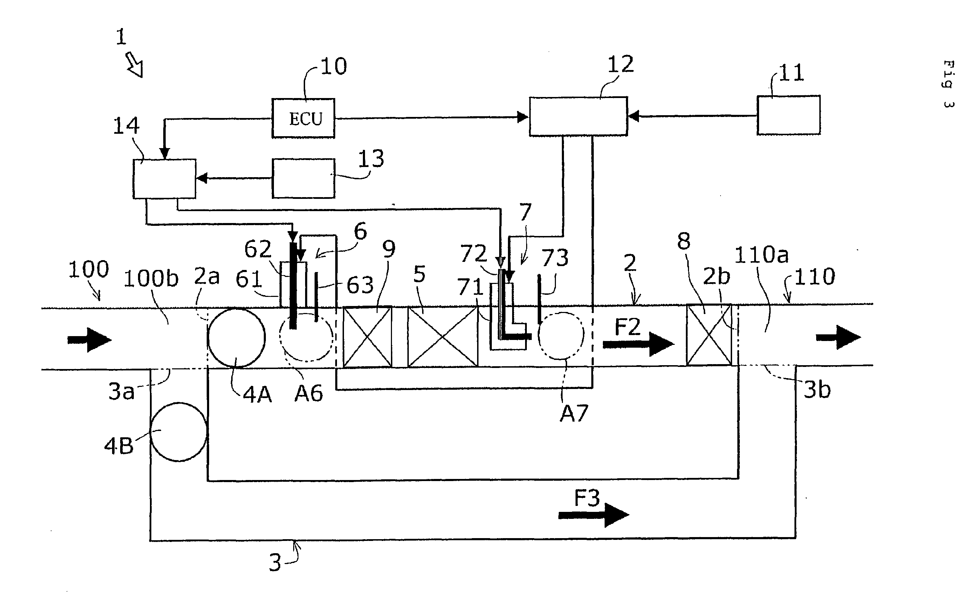

Referring to FIG. 3, an exhaust gas purification device 1 according to a third embodiment will be described. The exhaust gas purification device 1 according to the third embodiment has a configuration in which a sulfur oxide adsorbing material 9 is further provided for the exhaust gas purification device 1 according to the second embodiment.
In the case that sulfur is contained in fuel, sulfur oxides are contained in the exhaust gas. The sulfur oxide adsorbing material 9 is used to eliminate the sulfur oxides contained in the exhaust gas.

The sulfur oxide adsorbing material 9 is disposed on the exhaust upstream side of the nitrogen oxide adsorbing material 5 and on the exhaust downstream side of the adsorbed material detachment unit 6 inside the main exhaust passage 2.

The sulfur oxide adsorbing material 9 is a material for temporarily adsorbing the sulfur oxides in an excess air atmosphere and for detaching the adsorbed sulfur oxides in a rising temperature atmosphere or a reducing atmosphere. The adsorbing and detaching actions of the sulfur oxide adsorbing material 9 are similar to those of the nitrogen oxide adsorbing material 5.

### (OPERATION OF THIRD EMBODIMENT)

Next, the operation of the exhaust gas purification device 1, relating to the sulfur oxide adsorbing material 9, will be described below.

During the normal operation, the nitrogen oxides contained in the exhaust gas are adsorbed onto the nitrogen oxide adsorbing material 5. In addition, the sulfur oxides contained in the exhaust gas are adsorbed onto the sulfur oxide adsorbing material 9. The sulfur oxides are then eliminated from the exhaust gas.

During the regeneration operation, the controller 10 operates the adsorbed material detachment unit 6. The burned gas is fed to the exhaust downstream side of the zone A6 by the operation of the adsorbed material detachment unit 6. By virtue of the burned gas, a reducing atmosphere and a rising temperature atmosphere are generated around the nitrogen oxide adsorbing material 5, and a reducing atmosphere and a rising temperature atmosphere are also generated around the sulfur oxide adsorbing material 9.

When the sulfur oxide adsorbing material 9 is placed in the reducing atmosphere or the rising temperature atmosphere, the sulfur oxides adsorbed onto the sulfur oxide adsorbing material 9 are detached from the sulfur oxide adsorbing material 9. Hence, during the regeneration operation of the nitrogen oxide adsorbing material 5, the adsorption capability of the sulfur oxide adsorbing material 9 is also regenerated. Since the nitrogen oxide adsorbing material 5 is also placed in the rising temperature atmosphere or the reducing atmosphere at this time, the sulfur oxides are prevented from being adsorbed onto the nitrogen oxide adsorbing material 5.

### (EFFECTS OF THIRD EMBODIMENT)

The exhaust gas purification device 1 according to the third embodiment further has the following effects.

Since the exhaust gas purification device 1 comprises the sulfur oxide adsorbing material 9 on the exhaust upstream side of the nitrogen oxide adsorbing material 5, the exhaust gas purification device 1 can prevent the sulfur oxides from flowing into the nitrogen oxide adsorbing material 5. Moreover, the exhaust gas purification device can maintain the adsorption capability of the sulfur oxide adsorbing material 9 for adsorbing the sulfur oxides by the operation of the adsorbed material detachment unit 6. Besides, when the sulfur oxides are detached, the nitrogen oxide adsorbing material 5 is also placed in the rising temperature atmosphere or the reducing atmosphere, whereby the sulfur oxides do not attach to the nitrogen oxide adsorbing material 5. In other words, performance degradation of the nitrogen oxide adsorbing material 5 due to poisoning by the sulfur oxides is prevented.

### (FOURTH EMBODIMENT)

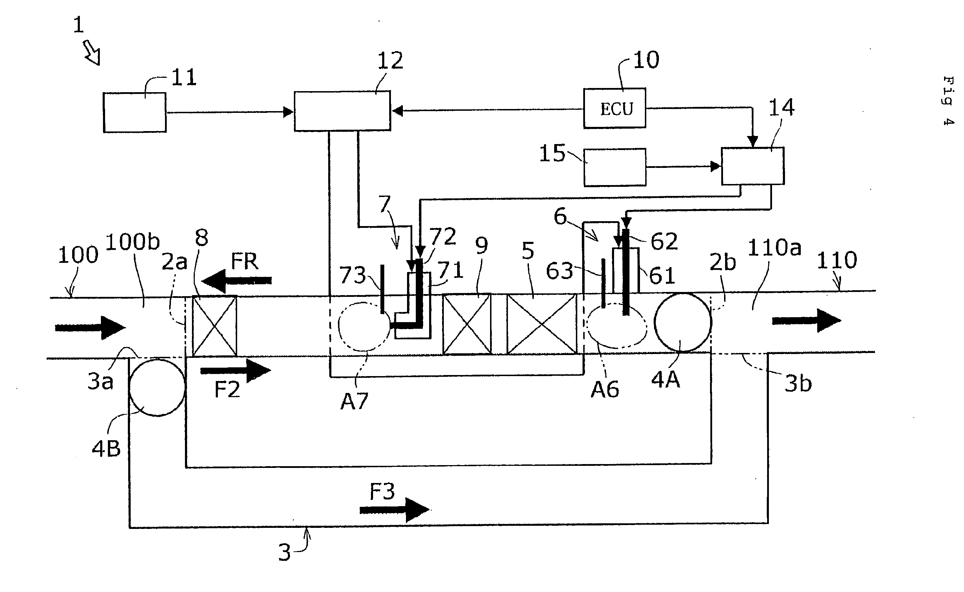

Referring to FIG. 4 an exhaust gas purification device 1 according to a fourth embodiment will be described. The exhaust gas purification device 1 according to the fourth embodiment is the same as the exhaust gas purification device 1 according to the third embodiment in the composition of the components, but different in the arrangement of the components. A first difference is found in the arrangement of the exhaust gas shutoff unit. A second difference is found in the arrangement of the nitrogen oxide adsorbing material 5, the adsorbed material detachment unit 6, the combustion device 7, the filter member 8 and the sulfur oxide adsorbing material 9 inside the main exhaust passage 2. Furthermore, the control actions of the controller 10 are changed due to the change in the arrangement. Hence, a third difference is found in the control actions of the controller 10.

In the fourth embodiment, the shutoff valves 4A and 4B serving as the exhaust gas shutoff unit are provided at the exhaust outlet 2b of the main exhaust passage 2 and at the exhaust inlet 3a of the branch exhaust passage 3, respectively.

In the fourth embodiment, the filter member 8, the combustion device 7, the sulfur oxide adsorbing material 9, the nitrogen oxide adsorbing material 5, the adsorbed material detachment unit 6 and the shutoff valve 4A are arranged in this order inside the main exhaust passage 2 in the exhaust direction F2 (from the exhaust upstream side to the exhaust downstream side).

### (OPERATION OF FOURTH EMBODIMENT)

Next, the operation of the exhaust gas purification device 1 according to the fourth embodiment will be described below. The exhaust gas purification device 1 according to the fourth embodiment comprises the nitrogen oxide adsorbing material 5, the sulfur oxide adsorbing material 9 and the filter member 8. Hence, the controller 10 according to the fourth embodiment performs the normal operation and the regeneration operation repeatedly and also performs the filter normal operation and the filter regeneration operation repeatedly.

In particular, in the fourth embodiment, the direction of the air flow passing through the nitrogen oxide adsorbing material 5 and the sulfur oxide adsorbing material 9 inside the main exhaust passage 2 during the normal operation is opposite to the direction of the air flow passing therethrough during the regeneration operation. On the other hand, in the first to third embodiments, the direction of the air flow passing through the nitrogen oxide adsorbing material 5 and the sulfur oxide adsorbing material 9 is the same at all times.

The route of the gas flow during the normal operation according to the fourth embodiment is similar to that according to the first to third embodiments. During the normal operation, the controller 10 opens the shutoff valve 4A and closes the shutoff valve 4B. Since the shutoff valve 4A is opened, the exhaust gas from the exhaust passage 100 on the engine side flows into the main exhaust passage 2 in the exhaust direction F2 and then is discharged to the junction exhaust passage 110. On the other hand, since the shutoff valve 4B is closed, the exhaust gas does not flow into the branch exhaust passage 3.

During the normal operation, the exhaust gas passes through the filter member 8, the sulfur oxide adsorbing material 9 and the nitrogen oxide adsorbing material 5 in this order inside the main exhaust passage 2. Hence, the sulfur oxides contained in the exhaust gas are eliminated by the sulfur oxide adsorbing material 9. The particulate matter contained in the exhaust gas is also eliminated by the filter member 8. Furthermore, the nitrogen oxides contained in the exhaust gas are eliminated by the nitrogen oxide adsorbing material 5.

The route of the gas flow during the regeneration operation according to the fourth embodiment is different from that according to the first to third embodiments. During the regeneration operation, the controller 10 closes the shutoff valve 4A and opens the shutoff valve 4B. Since the shutoff valve 4B is opened at this time, the exhaust gas from the exhaust passage 100 on the engine side flows into the branch exhaust passage 3 in the exhaust direction F3 and then is discharged to the junction exhaust passage 110. On the other hand, the shutoff valve 4A is shut off, and the shutoff valve 4A is used to open and close the exhaust outlet 2b of the main exhaust passage 2. The exhaust inlet 2a of the main exhaust passage 2 is opened. Hence, when the adsorbed material detachment unit 6 or the combustion device 7 is operated, since the adsorbed material detachment unit 6 and the combustion device 7 comprise an air supply unit respectively, an air flow occurs in direction FR opposite to the exhaust direction F2 (the direction of the exhaust gas) inside the main exhaust passage 2. For this reason, the gasses produced in the adsorbed material detachment unit 6 and the combustion device 7 are passed inside the main exhaust passage 2 in the opposite direction FR and join the exhaust gas at the exhaust outlet 100b. Furthermore, the gases are passed inside the branch exhaust passage 3 in the exhaust direction F3 and then discharged to the junction exhaust passage 110.

During the regeneration operation, the burned gas produced in the zone A6 by the adsorbed material detachment unit 6 is passed through the nitrogen oxide adsorbing material 5, the sulfur oxide adsorbing material 9, the combustion device 7 and the filter member 8 in this order inside the main exhaust passage 2 in the opposite direction FR. For this reason, the nitrogen oxides are detached from the nitrogen oxide adsorbing material 5, reduced to nitrogen by the combustion device 7 and rendered harmless. The sulfur oxides are detached from the sulfur oxide adsorbing material 9. In this way, the nitrogen oxide adsorbing material 5 and the sulfur oxide adsorbing material 9 are regenerated.

During the filter regeneration operation, the excess air burned gas produced in the zone A7 by the combustion device 7 is passed inside the main exhaust passage 2 in the opposite direction FR and passed through the filter member 8. As a result, the particulate matter trapped in the filter member 8 is burned and rendered harmless. In this way, the filter member 8 is regenerated.

The ratio of the regeneration operation time to the normal operation time is set so as to be small in the fourth embodiment as in the first to third embodiments.

### (EFFECTS OF FOURTH EMBODIMENT)

The exhaust gas purification device 1 according to the fourth embodiment has the following effects.

Since the branch exhaust passage 3 for allowing the exhaust gas to pass therethrough directly is provided, the exhaust gas purification device 1 can shut off the flow of the exhaust gas into the main exhaust passage 2, and can detach the nitrogen oxides from the nitrogen oxide adsorbing material 5 inside the main exhaust passage 2. For this reason, the exhaust gas purification device 1 can maintain the capability of adsorbing the nitrogen oxides while the nitrogen oxide adsorbing material 5, the adsorbed material detachment unit 6 and the combustion device 7 relating to the adsorption, detachment and reduction of the nitrogen oxides are disposed in only one exhaust passage (the main exhaust passage 2). As a result, an exhaust gas purification device being low in cost is provided.

In addition, since the exhaust gas purification device 1 comprises the filter member 8, the exhaust gas purification device 1 can eliminate the particulate matter from the exhaust gas. Furthermore, the exhaust gas purification device 1 can maintain the trapping capability of the filter member 8 by the operation of the combustion device 7.

Furthermore, since the exhaust gas purification device 1 comprises the sulfur oxide adsorbing material 9 on the exhaust upstream side of the nitrogen oxide adsorbing material 5, the exhaust gas purification device 1 can prevent the sulfur oxides from flowing into the nitrogen oxide adsorbing material 5. Moreover, the exhaust gas purification device 1 can maintain the adsorption capability of the sulfur oxide adsorbing material 9 for adsorbing the sulfur oxides by the operation of the adsorbed material detachment unit 6. In particular, when the adsorbed material detachment unit 6 is operated, the air flow to the exhaust upstream side (the flow of the burned gas in the opposite direction FR) is formed, whereby the sulfur oxides do not flow into the nitrogen oxide adsorbing material 5. In other words, performance degradation of the nitrogen oxide adsorbing material 5 due to poisoning by the sulfur oxides is prevented.

### INDUSTRIAL APPLICABILITY

The present invention is applicable to a device for purifying exhaust gas discharged from internal combustion engines, such as diesel engines, gas engines, gasoline engines or gas turbine engines, or burning appliances, such as combustion furnaces and boilers.

## Claims

1. An exhaust gas purification device connected to an exhaust passage on the engine side of an internal combustion engine or a burning appliance, comprising:
a main exhaust passage and a branch exhaust passage connected to the exhaust passage on the engine side;
an exhaust gas shutoff unit capable of shutting off exhaust gas at the exhaust inlets of the main exhaust passage and the branch exhaust passage;
a nitrogen oxide adsorbing material, disposed inside the main exhaust passage, for temporarily adsorbing nitrogen oxides in an excess air atmosphere and for detaching the adsorbed nitrogen oxides in a rising temperature atmosphere or a reducing atmosphere;
an adsorbed material detachment unit, disposed on the exhaust upstream side of the nitrogen oxide adsorbing material inside the main exhaust passage and having an air supply unit, for setting the atmosphere of the air supplied from the air supply unit to the rising temperature atmosphere or the reducing atmosphere; and
a combustion device disposed on the exhaust downstream side of the nitrogen oxide adsorbing material inside the main exhaust passage and including an air supply unit, a fuel supply unit and an ignition unit, wherein
the branch exhaust passage is configured so that the exhaust gas from the exhaust passage on the engine side is discharged directly without being processed.

2. The exhaust gas purification device according to claim 1, further comprising a filter member disposed on the exhaust downstream side of the combustion device inside the main exhaust passage and being capable of trapping particulate matter contained in the exhaust gas.

3. The exhaust gas purification device according to claim 1 or 2, further comprising a sulfur oxide adsorbing material, disposed on the exhaust upstream side of the nitrogen oxide adsorbing material and on the exhaust downstream side of the adsorbed material detachment unit inside the main exhaust passage, for temporarily adsorbing sulfur oxides in the excess air atmosphere and for detaching the adsorbed sulfur oxides in the rising temperature atmosphere or the reducing atmosphere.

4. An exhaust gas purification device connected to an exhaust passage on the engine side of an internal combustion engine or a burning appliance, comprising:
a main exhaust passage and a branch exhaust passage connected to the exhaust passage on the engine side;
an exhaust gas shutoff unit capable of shutting off exhaust gas at the exhaust outlet of the main exhaust passage and at the exhaust inlet of the branch exhaust passage, respectively;
a nitrogen oxide adsorbing material, disposed inside the main exhaust passage, for temporarily adsorbing nitrogen oxides in an excess air atmosphere and for detaching the adsorbed nitrogen oxides in a rising temperature atmosphere or a reducing atmosphere;
an adsorbed material detachment unit, disposed on the exhaust downstream side of the nitrogen oxide adsorbing material inside the main exhaust passage and having an air supply unit, for setting the atmosphere of the air supplied from the air supply unit to the rising temperature atmosphere or the reducing atmosphere in correspondence with the nitrogen oxide adsorbing material;
a sulfur oxide adsorbing material disposed on the exhaust upstream side of the nitrogen oxide adsorbing material inside the main exhaust passage and being capable of adsorbing sulfur oxides;
a combustion device disposed on the exhaust upstream side of the sulfur oxide adsorbing material inside the main exhaust passage and including an air supply unit, a fuel supply unit and an ignition unit;
a filter member disposed on the exhaust upstream side of the combustion device inside the main exhaust passage and being capable of trapping particulate matter contained in the exhaust gas; and
a controller for performing normal operation and regeneration operation, wherein
the branch exhaust passage is configured so that the exhaust gas from the exhaust passage on the engine side is discharged directly without being processed,
the controller opens the exhaust outlet of the main exhaust passage and closes the exhaust inlet of the branch exhaust passage by using the exhaust gas shutoff unit during the normal operation to allow the exhaust gas to pass through the main exhaust passage, and
the controller closes the exhaust outlet of the main exhaust passage and opens the exhaust inlet of the branch exhaust passage by using the exhaust gas shutoff unit during the regeneration operation, and operates the adsorbed material detachment unit and the combustion device to allow the air flow generated by virtue of the exhaust gas shutoff unit and the air supply unit of the combustion device to pass through the main exhaust passage in a direction opposite to the flow direction of the exhaust gas.
